(19) Europäisches Patentamt
European Patent Office
Office européen des brevets

(11) **EP 3 885 142 A1**

(12) **EUROPEAN PATENT APPLICATION**

(43) Date of publication:
**29.09.2021 Bulletin 2021/39**

(51) Int Cl.:
**B33Y 70/00** (2020.01)    **C08L 23/00** (2006.01)
**C08L 53/00** (2006.01)

(21) Application number: **21161507.5**

(22) Date of filing: **09.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.03.2020   JP 2020050876**

(71) Applicant: **Ricoh Company, Ltd.**
**Tokyo 143-8555 (JP)**

(72) Inventors:
• **OGAWA, Satoshi**
  **Tokyo 143-8555 (JP)**
• **MIKI, Tomoharu**
  **Tokyo 143-8555 (JP)**
• **NARUSE, Mitsuru**
  **Tokyo 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **RESIN POWDER, RESIN POWDER FOR PRODUCING THREE-DIMENSIONAL OBJECT, THREE-DIMENSIONAL OBJECT PRODUCING METHOD, AND THREE-DIMENSIONAL OBJECT PRODUCING APPARATUS**

(57)    Provided is a resin powder containing a polyolefin-based resin, wherein the average circularity of the resin powder is 0.950 or greater, a logarithmically converted value Log R of the volume resistivity R of the resin powder is 11.5 or less, and the degree of compression of the resin powder is 1.45 or less. An embodiment where the volume average particle diameter of the resin powder is 10 micrometers or greater but 150 micrometers or less, an embodiment where the resin powder further contains an antistatic agent, an embodiment where the antistatic agent is water-insoluble, and an embodiment where the content of the antistatic agent is 0.5% by mass or greater but less than 20% by mass relative to the total amount of the resin powder are preferable.

FIG. 2

**Description**

BACKGROUND OF THE INVENTION

Field of the Invention

The present disclosure relates to a resin powder, a resin power for producing a three-dimensional object, a three-dimensional object producing method, and a three-dimensional object producing apparatus.

Description of the Related Art

Hitherto, resin powders have been used in various fields. For example, it is known to use a resin powder as an object forming material for producing a three-dimensional object. For example, the resin powder described in Japanese Unexamined Patent Application Publication No. 2018-154116 has been known as a resin powder used for producing a three-dimensional object.

SUMMARY OF THE INVENTION

According to one aspect of the present disclosure, a resin powder contains a polyolefin-based resin. An average circularity of the resin powder is 0.950 or greater. A logarithmically converted value Log R of a volume resistivity R of the resin powder is 11.5 or less. A degree of compression of the resin powder is 1.45 or less.

BRIEF DESCRIPTION OF THE DRAWINGS

FIG. 1A is a schematic view illustrating a method for measuring a circularity of a particle;
FIG. 1B is a schematic view illustrating a method for measuring a circularity of a particle;
FIG. 2 is a schematic view illustrating an example of a three-dimensional object producing apparatus used in a three-dimensional object producing method of the present disclosure;
FIG. 3A is a schematic view illustrating an example of a step of forming a powder layer having a smooth surface;
FIG. 3B is a schematic view illustrating an example of a step of forming a powder layer having a smooth surface;
FIG. 3C is a schematic view illustrating an example of a step of dropping a liquid material for producing a three-dimensional object;
FIG. 3D is a schematic view illustrating an example of a step in which a resin powder layer is newly formed in a powder storing tank for forming;
FIG. 3E is a schematic view illustrating an example of a step in which a resin powder layer is newly formed in a powder storing tank for forming; and
FIG. 3F is a schematic view illustrating an example of a step of again dropping a liquid material for producing a three-dimensional object.

DESCRIPTION OF THE EMBODIMENTS

(Resin powder)

A resin powder of the present disclosure contains a polyolefin-based resin. The average circularity of the resin powder is 0.950 or greater. A logarithmically converted value Log R of the volume resistivity R of the resin powder is 11.5 or less. The degree of compression of the resin powder is 1.45 or less. The resin powder contains an external additive and other materials as needed.

The present inventors have studied the following problems of existing techniques and obtained the following findings.

Existing resin powders containing polyolefin-based resins have a high chargeability. Therefore, such resin powders heavily attach to the members that handle the resin powders having contact with the resin powders. This makes it difficult to appropriately handle the resin powders when producing an object using the resin powders, and may consequently bring about a problem that a product produced with the resin powders cannot satisfy desired properties.

It has been found possible to make the resin powder of the present disclosure excellent in handleability and fluidity by providing the resin powder with a predetermined shape property, a predetermined volume resistivity property, and a predetermined degree of compression, even when the resin powder contains a polyolefin-based resin that is easily charged.

It has also been found preferable that the resin powder of the present disclosure have other properties in addition to the average circularity, the logarithmically converted value Log R of the volume resistivity R, and the degree of compression.

The present disclosure has an object to provide a resin powder excellent in handleability and fluidity.

The present disclosure can provide a resin powder excellent in handleability and fluidity.

The resin powder of the present disclosure can be used as materials and substitute materials for metals used in the fields of, for example, three-dimensional object production, electronic equipment, automobiles, prototypes and trial products for strength tests, surface modifiers, spacers, lubricants, paints, grindstones, additives, secondary battery separators, foods, cosmetics, garment, precision equipment, semiconductors, aerospace, and medical care. A resin powder for producing a three-dimensional object, used as a resin powder in production of a three-dimensional object, will be described in detail below.

<Polyolefin-based resin>

The polyolefin-based resin is a polymer obtained from polymerization of a monomer having a polyolefin skeleton. Polyolefin is a resin having a double bond of carbonized oxygen.

The polyolefin-based resin is used in a wide range of fields as a structural material because the polyolefin-based resin is inexpensive and has an excellent mechanical property. Therefore, studies into the polyolefin-based resin are actively conducted in a wide range of applications, particularly, an application to production of three-dimensional objects.

Examples of the polyolefin-based resin include polyethylene and polypropylene. One of these polyolefin-based resins may be used alone or two or more of these polyolefin-based resins may be used in combination. Among these polyolefin-based resins, polypropylene has good properties such as the highest heat resistance among commodity resins, a higher strength than other resins, an excellent chemical resistance, a low specific gravity with floatability on water, and non-hygroscopicity. Polypropylene can be produced industrially, and has a wide range of applications such as stationery, paper money, automobile parts, packaging materials, fiber products, plastic parts, various containers, and experimental tools.

Examples of the polypropylene resin include homopolypropylene, random copolymerized propylene, and block polypropylene.

Examples of the homopolypropylene include a propylene homopolymer.

Examples of the random copolymerized propylene include copolymers of ethylene and propylene.

Examples of the block polypropylene include a block copolymerized polypropylene obtained by polymerizing an ethylene-propylene-terpolymer (synthetic rubber) with homopolypropylene. One of these polypropylenes may be used alone or two or more of these polypropylenes may be used in combination.

Among these polypropylenes, the block copolymerized polypropylene resin that has a rubber elasticity and is used for exterior parts of automobiles is suitable for application to production of three-dimensional objects.

The block copolymerized polypropylene resin is also preferable in terms of a high elasticity and an easy elongability, and a relatively high strength to the contrary.

For example, for use in production of three-dimensional objects, block copolymers are preferable because block copolymers can produce three-dimensional objects excellent in heat resistance and strength, have a higher crystallinity and a higher melting point than random copolymers and mono-polypropylene and hence have a higher tensile strength, can secure a process window, and can hence produce objects that are good in terms of warpage and roughness.

The weight average molecular weight of the polyolefin-based resin is preferably 40,000 or greater but 300,000 or less and more preferably 100,000 or greater but 250,000 or less.

The content of the polyolefin-based resin is preferably 50% by mass or greater, more preferably 70% by mass or greater, and yet more preferably 95% by mass or greater relative to the total amount of the resin powder.

Heat resistance of a three-dimensional object can be evaluated based on the deflection temperature under load.

The deflection temperature under load is one of testing methods for evaluating heat resistance of synthetic resins, and refers to a temperature at which the deflection level of a sample becomes constant when the temperature of the sample is raised in a state that a load, which is defined by the testing method standards, is applied to the sample. The testing method is stipulated by, for example, ASTM D648, and JIS 7191.

The strength of a three-dimensional object can be measured and evaluated according to a tensile test compliant with ISO 527.

-Average circularity-

As the average circularity, an arithmetic mean value of the circularity of the resin powder obtained by measurement can be used. A true circle has an average circularity of 1, and a more deformed circle has a lower average circularity value.

The average circularity of the resin powder is 0.950 or greater, preferably 0.965 or greater, and more preferably 0.980 or greater.

When the average circularity of the resin powder is less than 0.950, the resin powder has a poor handleability and a poor fluidity. For example, when the resin powder is used in production of a three-dimensional object, particles having a wider surface area are fricted more times and triboelectrically charged more heavily, leading to increase of attachment of the particles during recoating. Moreover, particles having a wider surface area have a wider portion to attach to other particles, leading to aggregation of particles. This degrades recoatability and dimensional stability.

When the average circularity of the resin powder is 0.950 or greater, the resin powder having a small surface area can be suppressed from being triboelectrically charged, does not electrostatically or non-electrostatically attach to anything during recoating in production of a three-dimensional object, and can produce an object without aggregation of particles or attachment to the recoater, leading to improvement of dimensional stability.

As a method for easily obtaining the circularity, for example, the circularity can be quantified by measurement with a wet flow-type particle diameter/shape analyzer (instrument name: FPIA-3000, available from Sysmex Corporation).

The wet flow-type particle diameter/shape analyzer can capture, at a high speed, images of particles in a suspension flowing in a glass cell with a CCD, and analyze individual particle images real-time. Such a system for capturing images of particles and analyzing the images is effective for obtaining the average circularity of the present disclosure. The number of particles to be counted for measurement is not particularly limited, but is preferably 1,000 or greater and more preferably 3,000 or greater.

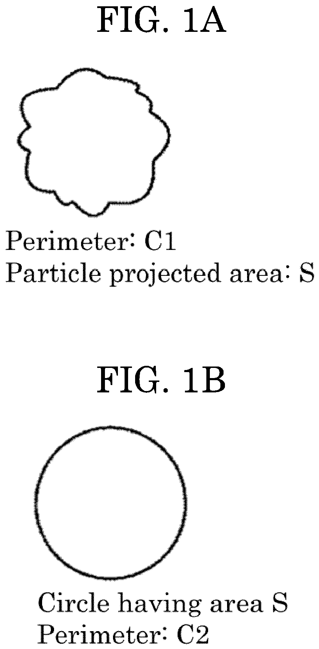

Specifically, a surfactant, preferably alkylbenzene sulfonate (from 0.1 mL through 0.5 mL) is added as a dispersant to previously impurity solid-removed water (from 100 mL through 150 mL) in a container, and a measurement sample (about from 0.1 g through 0.5 g) is further added to the resultant. Subsequently, this measurement sample-dispersed suspension is subjected to dispersion treatment for about from one minute through three minutes using an ultrasonic disperser (BRANSON 2510J-MT, with an ultrasonic output power of 125 W and an oscillation frequency of 42 kHz) to prepare a dispersion liquid having a concentration of from 3,000 particles/microliter through 10,000 particles/microliter. The dispersion liquid is set in the wet flow-type particle diameter/shape analyzer, and the shape and distribution of the measurement sample are measured. Based on the measurement results, a value C2/C1 is calculated, where C1 is the perimeter of the projected shape of the measurement sample illustrated in FIG. 1A, and C2 is the perimeter of a true circle illustrated in FIG. 1B and having the same area as the projected area S of the projected shape of the measurement sample illustrated in FIG. 1A. An average of the value C2/C1 is used as the average circularity.

-Logarithmically converted value Log R of volume resistivity-

The logarithmically converted value Log R of the volume resistivity of the resin powder is a value measured according to a capacitance bridge measuring method using a dielectric loss measuring instrument (TR-10C, available from Ando Electric Co., Ltd.). The volume resistivity represents a resistance value per unit volume, unique to a material. In the present disclosure, Log R, which is a logarithmically converted value of the volume resistivity, is used.

For measurement, a sample (3 g) is put in a dice, and pressed using an automatic molding device at 5 mPa for a press time of one minute, to produce a pellet for measurement (with a diameter of 40 mm and a thickness of 2 mm). The produced pellet is set in a dielectric loss measuring instrument including a WBG-9-type oscillator, a BDA-9-type equilibrium point detector, a TO-9-type thermostat chamber, and a SE-70-type electrode (with a diameter of 18.1 mm), and measured at an oscillation frequency of 1 kHz and under the following measurement conditions.

[Measurement conditions]

- Temperature: 23 degrees C
- Relative humidity: 40%

The logarithmically converted value Log R of the volume resistivity is calculated according to the formula below. "RATIO" below is a fixed value.

$$\text{Volume resistivity} = \log[A \times 10/\text{RATIO} \times \{R \cdot R_0\} \times t]$$

t (mm): thickness of the sample

A (cm): effective electrode area (2.57 cm$^2$)
$R_0$ (S): conductance at zero stability
R (S): conductance during measurement
RATIO: $1\times10^{-9}$

The logarithmically converted value Log R of the volume resistivity is 11.5 or less, preferably 11.0 or less, more preferably 10.5 or less, and yet more preferably 10.3 or less. When the logarithmically converted value Log R of the volume resistivity is 11.5 or less, the resin powder has a low chargeability, can be prevented from being electrostatically attached to a metallic member, and can obtain a stable handleability and a stable fluidity. For example, when the resin powder is used for production of a three-dimensional object, the resin powder can have a stable recoatability. With a stable recoatability, the resin powder can produce an object having a dimensional stability and a good surface property (surface condition).

-Degree of compression-

The degree of compression is a property of a powder obtained according to the measuring method described below.
The degree of compression can be measured using a powder tester PT-X TYPE (available from Hosokawa Micron Corporation). The degree of compression indicates an extent of compression. A greater degree of compression means a greater difficulty with the resin powder loosening from a compressed, aggregated state, and a less degree of compression means a greater ease with the resin powder loosening from a compressed, aggregated state. In the present disclosure, a Hausner ratio is used as the degree of compression.

[Measuring method]

The parts mentioned below are attached on a shaking table of the powder tester.

1) vibrochute
2) space ring
3) sieve with a mesh size of 212 micrometers.
4) sieve holder
5) holding bar

The sample is weighed out in 50 g, and left to stand still on the sieve having a mesh size of 212 micrometers.
The sample is injected into a 25 mL container at an amplitude of 1 mm for 30 seconds, and then left to stand still for one minute. After the sample is left to stand still, the upper surface of the sample is leveled, and the sample is weighed. The obtained weight is divided by the volume, to calculate "loose apparent density".
The container used for the weight measurement is returned to the instrument, and tapped 60 times for one minute. Then, the sample is injected into the resultant for 30 seconds and left to stand still, the upper surface of the resultant is leveled, and the resultant is weighed. The obtained weight is divided by the volume, to calculate "hardened apparent density".
As the leveling method, a flat plate longer than the diameter of the rim of the container is slid against the rim of the container at an angle of 45 degrees with respect to the opening surface of the container, to remove the resin powder protruding upward from the opening surface of the container.
The degree of compression is calculated according to the formula below, by dividing the loose apparent density by the hardened apparent density.

$$\text{Degree of compression (Hausner ratio)} = (\text{loose apparent density})/(\text{hardened apparent density})$$

The degree of compression of the resin powder is 1.45 or less, preferably 1.35 or less, more preferably 1.25 or less, and yet more preferably 1.20 or less.
When the degree of compression is 1.45 or less, the resin powder can obtain an excellent handleability and an excellent fluidity, and can be suppressed from aggregation of particles. For example, when the resin powder is used in production of a three-dimensional object, the resin powder can have a stable recoatability. With a stable recoatability, the resin powder can produce an object having a dimensional stability and a good surface property (surface condition).

Further, for example, the resin powder undergoes little volume shrinkage when written with laser in a SLS method, and can have an excellent dimensional stability.

-Other properties-

The other properties are not particularly limited and may be appropriately selected depending on the intended purpose. Examples of the other properties include "particle size distribution (volume average particle diameter Dv/number average particle diameter Dn)" and "equivalent circle diameter".

--Particle size distribution (volume average particle diameter Dv/number average particle diameter Dn)--

The particle size distribution (volume average particle diameter Dv/number average particle diameter Dn) of the resin powder means a value measured by laser diffraction scattering method (Microtrac method, instrument name: MT3000II, available from MicrotracBel Corporation). MT3000II used for measuring the particle size distribution in the present disclosure needs to select a refractive index depending on the resin powder (sample) to be measured, as a setting for measurement. In the present disclosure, polyethylene is measured by a transparent mode at a refractive index of 1.53. Polypropylene is measured at a refractive index of 1.48, and a measured value obtained by a dry mode (solvent: air) is employed.

The particle size distribution of the resin powder is preferably 1.4 or less, more preferably 1.3 or less, and yet more preferably 1.2 or less. When the particle size distribution of the resin powder is 1.4 or less, the resin powder can have an excellent fluidity. For example, when the resin powder is used for production of a three-dimensional object, layers can be densely filled with the resin powder when layers of the resin powder are additively manufactured, making it possible to improve the filling density during object production and improve the strength of a three-dimensional object to be produced.

---Volume average particle diameter Dv---

The volume average particle diameter Dv of the resin powder is preferably 10 micrometers or greater but 150 micrometers or less and more preferably 20 micrometers or greater but 140 micrometers or less. When the volume average particle diameter Dv of the resin powder is 10 micrometers or greater but 150 micrometers or less, the resin powder can be suppressed from being aggregated due to charging, and can have an improved fluidity. When the resin powder is used in production of a three-dimensional object, the resin powder that has a volume average particle diameter Dv of 10 micrometers or greater but 150 micrometers or less is easily grounded smoothly in a powder bed additive manufacturing method because the resin powder has an excellent fluidity, leading to improvement of heandleablity (recoatability). When the volume average particle diameter Dv of the resin powder is 10 micrometers or greater but 150 micrometers or less, for example, layers can be densely filled with the resin powder when layers of the resin powder are additively manufactured, making it possible to improve the filling density during object production and improve the strength of a three-dimensional object to be produced. Moreover, when the volume average particle diameter Dv of the resin powder is 10 micrometers or greater but 150 micrometers or less, for example, an object has an inconspicuous surface roughness and has an improved surface property.

The volume average particle diameter Dv can be measured according to the same method and using the same instrument as used for measuring the particle size distribution.

<Other materials>

The other materials are not particularly limited and may be appropriately selected depending on the intended purpose. Examples of the other materials include an antistatic agent, an external additive, a reinforcer, a flame retardant, a plasticizer, a stabilizer, an antioxidant, and a crystal nucleating agent. One of these materials may be used alone or two or more of these materials may be used in combination. These materials may be mixed with the polyolefin-based resin to be internally present in the resin powder, or may be attached on the surface of the resin powder.

«Antistatic agent»

The antistatic agent is not particularly limited and may be appropriately selected depending on the intended purpose. Examples of the antistatic agent include a water-insoluble antistatic agent.

The antistatic agent can suppress charging of resins that are easily charged, such as polyolefin resins in particular. Therefore, the antistatic agent can improve fluidity and handleability of such resins, and can prevent the resins from attaching to metallic members such as a recoater when the resin powder is used for, for example, production of a three-dimensional object.

When the antistatic agent is water-insoluble, the antistatic agent is less easily exposed to the surface, and even when exposed, less easily receives influences from the external environment such as temperature and humidity, and can suppress degradation of fluidity due to the antistatic agent exposed. For example, when the resin powder is used for production of a three-dimensional object, it is possible to suppress dimensional stability degradation due to recoatability degradation accompanying fluidity degradation.

Examples of the water-insoluble antistatic agent include a high-molecular-weight antistatic agent and a low-molecular-weight antistatic agent.

Examples of the high-molecular-weight antistatic agent include polyether-polyolefin block copolymers (block copolymers containing a polyether-based block and a polyolefin-based block) (ADEKA, AS-301E), polyolefin-polyethylene oxide block copolymers, and polyether ester amides.

Examples of the low-molecular-weight antistatic agent include a boron-based complex (available from Japan Carlit Co., Ltd., LR-147), carbon black, carbon nanotube, and fullerenes.

Among these antistatic agents, polyether-polyolefin block copolymer antistatic agents are preferable. A polyether-polyolefin block copolymer antistatic agent is preferable because the antistatic agent mixes well with a polyolefin group, is easily dispersed in the particles of the resin powder, and a hydrophilic group has a charging property and is oriented outward.

The water-insoluble antistatic agent hardly bleeds when heated, and is rarely exposed to the surface because the water-insoluble antistatic agent is easily dispersible. Therefore, the water-insoluble antistatic agent hardly receives influences from the external environment, and can provide the particles with durability through repeated object production. Unlike a low-molecular-weight antistatic agent, a high-molecular-weight antistatic agent can be suppressed from inhibiting melting of the resin and degrading the object production strength.

The content of the antistatic agent is preferably 0.5% by mass or greater but less than 20% by mass and more preferably 1.0% by mass or greater but 10% by mass or less relative to the total amount of the resin powder. When the content of the antistatic agent is 0.5% by mass or greater but less than 20% by mass relative to the total amount of the resin powder, an effect of reducing resistance can be improved and handleability relating to charging can be improved. When the content of the antistatic agent is 0.5% by mass or greater but less than 20% by mass relative to the total amount of the resin powder, it is possible to suppress fluidity degradation due to influences of the antistatic agent present on the surface, and suppress degradation of properties of an object produced using the resin powder. Specifically, for example, when the resin powder is used for production of a three-dimensional object, it is possible to suppress, for example, attachment of the resin powder to the recoater, suppress degradation of the strength of an object, suppress fluidity degradation, and improve dimensional stability of an object.

The amount of mass reduction of the antistatic agent at 150 degrees C when measured according to ISO 7111-1987 is preferably 1% or less. With such a property of the antistatic agent, for example, when the resin powder is used for production of a three-dimensional object, it is possible to suppress attachment of the resin powder to a laser window due to a gas emitted during object production and suppress contamination of the interior of the apparatus.

«External additive»

The external additive is not particularly limited and may be appropriately selected depending on the intended purpose so long as fluidity at a high temperature (about 100 degrees C or higher) can be secured. Examples of the external additive include resin minute particles and inorganic minute particles. When the resin powder has the external additive on the surface thereof, the resin powder has an improved fluidity, is suppressed from attaching to, for example, members that handle the resin powder, and has an improved handleability.

The minute particles refer to particles that have a number average particle diameter $D_n$ of 0.001 micrometers or greater but 2 micrometers or less.

The number average particle diameter $D_n$ of the external additive is preferably 0.1 micrometers or greater but 2 micrometers or less and more preferably 0.2 micrometers or greater but 1 micrometer or less.

When the number average particle diameter $D_n$ of the external additive is 0.1 micrometers or greater but 2.0 micrometers or less, fluidity at a high temperature (about 100 degrees C or higher) can be improved.

With the number average particle diameter $D_n$ of the external additive described above, for example, when the resin powder is used for production of a three-dimensional object, layers can be densely filled with the resin powder when layers of the resin powder are additively manufactured, making it possible to improve the filling density during object production and improve the strength of a three-dimensional object to be produced.

With the number average particle diameter $D_n$ of the external additive described above, for example, when the resin powder is used for production of a three-dimensional object, attachment of the resin powder to the members that handle the resin powder, such as a recoater, is reduced, and recoatability (handleability) can be improved.

Examples of the resin minute particles include acrylic resins, melamine resins, benzoguanamine resins, and copolymer resins containing these resins.

Examples of the inorganic minute particles include inorganic oxides such as silica, titania, alumina, and zinc oxide.

The external additive may serve as a lubricant or may serve as an aggregation preventing agent for preventing aggregation of particles.

Examples of the external additive that serves as a lubricant include surface treatments such as silicone oil treatment and HMDS treatment for reducing surface energy.

Examples of the external additive that serves as an aggregation preventing agent include resin particles having a large particle diameter.

The external additive to which surface treatment is appropriately applied may be used. Examples of the surface treatment include hydrophobizing treatment such as hexamethyl disilazane (HMDS) treatment, amine treatment, and fluorine treatment for charging.

The method for adding the external additive to the resin powder is not particularly limited and a known method may be employed. Examples of the method include a method of mixing the resin powder and the external additive using a mixer.

Examples of the mixer include a Henschel mixer.

The mixing conditions are not particularly limited and may be appropriately selected depending on the intended purpose. Examples of the mixing conditions include stirring and mixing at a stirring speed of 30 m/s for five minutes.

«Reinforcer»

The reinforcer is added mainly for enhancing the strength, and is added as a filler or a packing material. Examples of the reinforcer include glass fillers, glass beads, carbon fiber, aluminum balls, and the reinforcers described in International Publication No. WO 2008/057844. One of these reinforcers may be used alone or two or more of these reinforcers may be used in combination. The reinforcer may be contained in the resin powder (particles). The resin powder of the present disclosure is preferably appropriately dry, or may be dried before use using a vacuum drier or with addition of silica gel.

«Flame retardant»

Examples of the flame retardant include metal compounds and nitrogen compounds.

Examples of the metal compounds include antimony compounds and metal hydroxides.

Examples of the nitrogen compound include melamine cyanurate.

«Plasticizer»

Examples of the plasticizer include phthalic acid ester, adipic acid ester, and trimellitic acid ester.

«Stabilizer»

Examples of the stabilizer include phenol-based antioxidants, phosphite-based antioxidants, and phosphorus-based antioxidants.

«Antioxidant»

Examples of the antioxidant include hydrazide-based and amide-based antioxidants serving as metal deactivators, phenol-based (hindered phenol-based) and amine-based antioxidants serving as radical scavengers, phosphate-based and sulfur-phased antioxidants serving as peroxide decomposers, and triazine-based antioxidants serving as ultraviolet absorbents. One of these antioxidants may be used alone or two or more of these antioxidants may be used in combination. Particularly, combined use of radical scavengers and peroxide decomposers is known to be effective, and is particularly effective in the present disclosure.

The content of the antioxidant is preferably 0.05% by mass or greater but 5% by mass or less, more preferably 0.1% by mass or greater but 3% by mass or less, and particularly preferably 0.2% by mass or greater but 2% by mass or less relative to the total amount of the resin powder. When the content of the antioxidant is 0.05% by mass or greater but 5% by mass or less relative to the total amount of the resin powder, an effect of preventing thermal degradation of the resin powder is obtained, and the resin powder that has once been used for object production can be recycled when the resin powder is used for production of a three-dimensional object. An effect of preventing discoloration due to heat is also obtained.

«Crystal nucleating agent»

The crystal nucleating agent is not particularly limited and may be appropriately selected depending on the intended purpose.

(Method for producing resin powder)

A method for producing a resin powder of the present disclosure is a method for producing the resin powder of the present disclosure, includes a step of using a melting kneading method, and further includes other steps as needed.

The materials used in the method for producing a resin powder of the present disclosure are the same as the materials of the resin powder of the present disclosure.

The steps of the melting kneading method will be described.

After the polyolefin-based resin and a water-soluble resin are mixed and kneaded using an extruder kneader, the resultant is rolled and cooled, and coarsely ground. The obtained coarsely ground product is washed with water to wash away only the water-soluble resin and extract the resin needed.

The water-soluble resin needs to have a viscosity of a certain level not only when dissolved in water but also when kneaded at a high temperature.

Examples of the water-soluble resin include resole-type phenol resins, methylolized urea (urea) resins, methylolized melamine resins, polyvinyl alcohols, polyethylene glycol, polyethylene oxides, polyacrylamides, and carboxymethyl cellulose (CMC).

Examples of the unit configured to mix the polyolefin-based resin and the water-soluble resin include a mixer. The mixer is not particularly limited and may be appropriately selected depending on the intended purpose so long as the mixer can mix the resins. Examples of the mixer that can perform stirring at a high speed include a Henschel mixer, a super mixer, and a mechanohybrid.

The extruder kneader is not particularly limited and may be appropriately selected depending on the intended purpose. Examples of the extruder kneader include a uniaxial kneader, a biaxial kneader, two rolls, and three rolls. In order to obtain a small particle diameter and a narrow distribution, there is a need for selecting a device that can perform high-speed dispersion.

Examples of the device that can perform high-speed dispersion include a KNEADEX kneader available from Nippon Coke & Engineering Co., Ltd.

For post treatment, the kneaded mixture is coarsely ground after rolled and cooled.

Examples of the rolling cooling device include a drum cooler available from Nippon Coke & Engineering Co., Ltd.

The coarse grinder is not particularly limited and may be appropriately selected depending on the intended purpose so long as the obtained kneaded product can be coarsely ground to chips having a size of about 2 mm. Examples of the coarse grinder include RHOTOPLEX, a hammer mill, a feather mill, and a cutter mill.

Next, the obtained coarsely ground products are washed with water.

Subsequently, the water-soluble resin and the polyolefin-based resin powder are subjected to solid-liquid separation by filtration. The sample on the filter paper is collected and dried on a fluid bed for 48 hours. In this way, the resin powder can be obtained.

The method for producing a resin powder of the present disclosure can produce particles having an average circularity of 0.950 or greater and a degree of compression of 1.45 or less, and can produce a resin powder having a narrow particle size distribution (a particle size distribution of 1.35 or less) through a smaller number of steps.

(Resin powder for producing three-dimensional object)

A resin powder for producing a three-dimensional object of the present disclosure contains a polyolefin-based resin. The average circularity of the resin powder for producing a three-dimensional object is 0.950 or greater. A logarithmically converted value Log R of the volume resistivity R of the resin powder for producing a three-dimensional object is 11.5 or less. The degree of compression of the resin powder for producing a three-dimensional object is 1.45 or less. The resin powder for producing a three-dimensional object further contains other components as needed.

The resin powder for producing a three-dimensional object of the present disclosure is the same as the resin powder of the present disclosure.

The resin powder for producing a three-dimensional object of the present disclosure can be used in SLS method and SMS method, and has properties that appropriately balance parameters such as particle size, particle size distribution, heat transfer property, melt viscosity, bulk density, fluidity, melting temperature, and recrystallization temperature.

The resin powder for producing a three-dimensional object of the present disclosure is effective for production of a three-dimensional object using a laser sintering method by a PBF method such as a selective laser sintering (SLS) method or a selective mask sintering (SMS) method.

Using the resin powder for producing a three-dimensional object of the present disclosure, it is possible to obtain a three-dimensional object excellent in fluidity and handleability (recoatability), having a high dimensional accuracy and a high strength, and excellent in surface property (orange peel property).

(Method for producing resin powder for producing three-dimensional object)

A method for producing a resin powder for producing a three-dimensional object is the same as the method for producing a resin powder of the present disclosure.

(Three-dimensional object producing method and three-dimensional object producing apparatus)

A three-dimensional object producing method of the present disclosure repeats a layer forming step of forming a layer containing the resin powder for producing a three-dimensional object of the present disclosure and a powder bonding step of mutually bonding the particles of the resin powder for producing a three-dimensional object in a selected region of the layer formed, and further includes other steps as needed.

A three-dimensional object producing apparatus of the present disclosure includes a layer forming unit configured to form a layer containing the resin powder for producing a three-dimensional object of the present disclosure, and a powder bonding unit configured to mutually bond the particles of the resin powder for producing a three-dimensional object in a selected region of the layer formed, and further includes other units as needed.

As the resin powder for producing a three-dimensional object, the resin powder of the present disclosure may also be used.

The resin powder for producing a three-dimensional object can be used in and is effective for all kinds of three-dimensional object producing apparatuses of a powder bed additive manufacturing type. Three-dimensional object producing apparatuses of a powder bed additive manufacturing type are varied in the unit configured to, after a layer of a powder is formed, mutually bond the particles of the resin powder for producing a three-dimensional object in a selected region of the layer of the powder, and examples of the unit generally include an electromagnetic irradiating unit represented by SLS method and SMS method, and a liquid discharging unit represented by binder jet method. The resin powder for producing a three-dimensional object of the present disclosure can be applied to any of these methods, and is effective for all three-dimensional object producing apparatuses that include a unit configured to additively manufacture layers of a powder.

"Bonding" means maintaining a state of one substance contacting another substance at the interface between the substances.

The powder bonding unit is not particularly limited and may be appropriately selected depending on the intended purpose. Examples of the powder bonding unit include a unit configured to emit electromagnetic waves.

Examples of the electromagnetic irradiation source used for electromagnetic irradiation in a three-dimensional object producing apparatus of SLS type and SMS type employing electromagnetic irradiation include lasers configured to emit ultraviolet rays, visible light rays, and infrared rays, microwaves, discharge, electron beams, radiation heaters, LED lamps, and combinations thereof.

When employing electromagnetic irradiation as a method for selectively bonding particles of the resin powder for producing a three-dimensional object, it is optional to promote efficient absorption of electromagnetic waves or inhibit absorption of electromagnetic waves. For example, an absorbent or an inhibitor may be added in the resin powder for producing a three-dimensional object.

A three-dimensional object formed by laser sintering of the resin powder for producing a three-dimensional object is smooth and has a surface having a sufficient resolution that is lower than or equal to the minimum orange peel.

The orange peel generally refers to surface defects present in the surface of a three-dimensional object formed by laser sintering by PBF, such as an inappropriate coarse surface, voids, or distortion.

For example, the voids not only spoil the appearance, but also may significantly affect the mechanical strength.

It is preferable that a three-dimensional object formed by laser sintering of the resin powder for producing a three-dimensional object not exhibit inappropriate process properties such as warpage, distortion, and fuming due to phase change that occurs during cooling performed from the middle of sintering until after sintering.

Using the resin powder for producing a three-dimensional object of the present disclosure, it is possible to obtain a three-dimensional object having a high dimensional stability and a high strength and excellent in surface property (orange peel property).

The resin powder for producing a three-dimensional object of the present disclosure further has an excellent recyclability, and it is possible to suppress degradation of dimensional stability and strength of a three-dimensional object even if excessive powder is used repeatedly to form the three-dimensional object.

Recycled powder used in the present disclosure can form a 150 mm-long multipurpose dog bone-like test specimen that is compliant with International Organization for Standardization (ISO) 3167 Type 1A and that will not exhibit strength degradation even when the recycled powder has been tested according to a recycling testing method described below at least once, more preferably five times, yet more preferably seven times, and particularly preferably at least ten times in a PBF type producing apparatus (available from Ricoh Company, Ltd., AM S5500P).

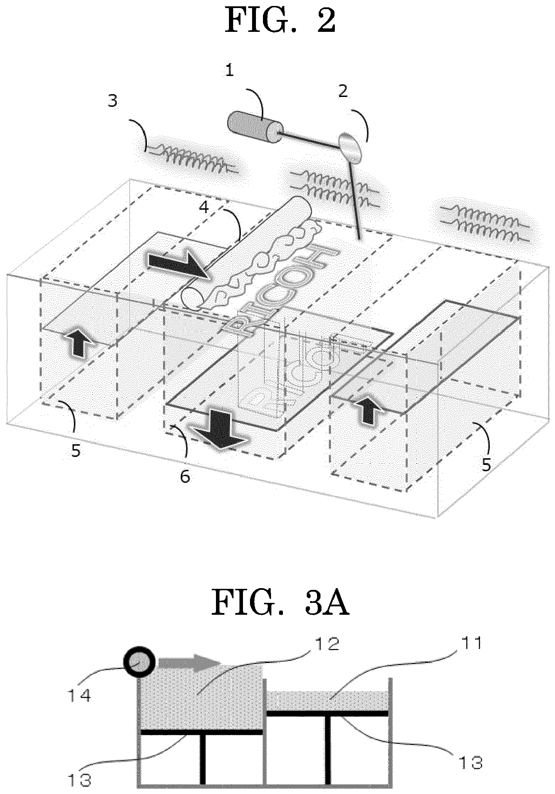

Next, an example of the three-dimensional object producing apparatus will be described with reference to FIG. 2. FIG. 2 is a schematic view illustrating an example of the three-dimensional object producing apparatus. As illustrated in FIG. 2, a powder is stored in a powder supplying tank 5, and a roller 4 supplies the powder to a laser scanning space 6 in accordance with the amount of powder to be used. It is preferable that the supplying tank 5 be temperature-adjusted by a heater 3. Via a reflection mirror 2, the laser scanning space 6 is irradiated with a laser output by an electromagnetic irradiation source 1. A three-dimensional object can be obtained through sintering of the powder by the heat of the laser.

The temperature of the supplying tank 5 is preferably lower than the melting point of the powder by 10 degrees C or more.

The parts bed temperature in the laser scanning space is preferably a temperature lower than the melting point of the powder by 5 degrees C or more.

The laser output power is not particularly limited, may be appropriately selected depending on the intended purpose, and is preferably 10 watts or higher but 150 watts or lower.

In another embodiment, a three-dimensional object of the present disclosure can be produced using a selective mask sintering (SMS) technique. For example, the SMS process described in, for example, U.S. Patent No. 6,531,086 can be suitably employed.

In the SMS process, a shielding mask is used to selectively shield infrared radiation and selectively irradiate a part of a powder layer with infrared rays. When employing the SMS process in order to produce a three-dimensional object using the resin powder for producing a three-dimensional object of the present disclosure, it is possible and effective to add a material that enhances the infrared absorbing property of the resin powder for producing a three-dimensional object in the resin powder for producing a three-dimensional object. For example, the resin powder for producing a three-dimensional object may contain one or more kinds selected from heat absorbents and dark materials (e.g., carbon fiber, carbon black, carbon nanotube, or carbon fiber, and cellulose nanofiber).

In yet another embodiment, a three-dimensional object can be produced using the resin powder for producing a three-dimensional object of the present disclosure and a three-dimensional object producing apparatus of the binder jet type described above. This method repeats a layer forming step of forming a layer formed of the resin powder for producing a three-dimensional object of the present disclosure, and a powder bonding step of discharging a liquid to a selected region of the layer formed and drying the liquid to mutually bond particles of the resin powder for producing a three-dimensional object, and further includes other steps as needed.

The three-dimensional object producing apparatus of the present disclosure includes a layer forming unit configured to form a layer formed of the resin powder for producing a three-dimensional object of the present disclosure, and a unit configured to discharge a liquid to a selected region of the layer formed, and further includes other units as needed. It is preferable that the unit configured to discharge a liquid employ an inkjet method in terms of dimensional accuracy of a three-dimensional object to be obtained and object production speed.

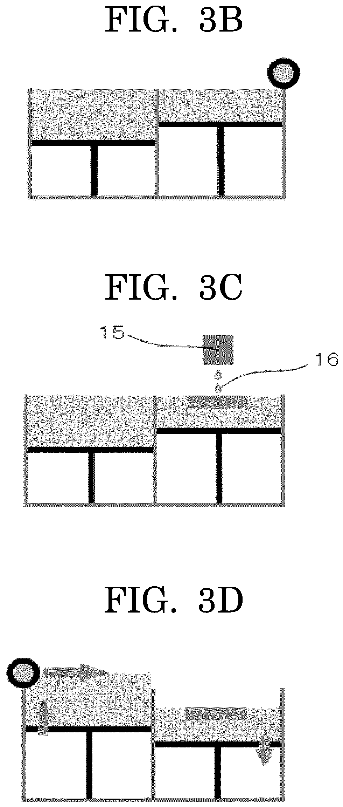

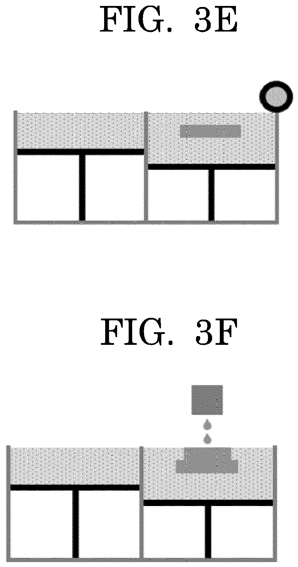

FIG. 3 illustrates an example of a schematic view of a binder jet process. The three-dimensional object producing apparatus illustrated in FIG. 3 includes a power storing tank 11 for forming and a powder storing tank 12 for supplying. These powder storing tanks include stages 13 movable in the vertical direction respectively. The resin powder for producing a three-dimensional object of the present disclosure is placed over the stages 13, to form a layer formed of the resin powder for producing a three-dimensional object. Above the powder storing tank 11 for forming, the three-dimensional object producing apparatus includes a three-dimensional object producing liquid material supplying unit 15 configured to discharge a liquid material 16 for producing a three-dimensional object to the resin powder for producing a three-dimensional object in the powder storing tank 11. The three-dimensional object producing apparatus also includes a layer forming unit 14 (hereinafter may also be referred to as leveling mechanism or recoater) that can supply the resin powder for producing a three-dimensional object from the powder storing tank 12 for supplying to the powder storing tank 11 for forming while leveling the surface of (a layer) of the resin powder for producing a three-dimensional object in the powder storing tank 11 for forming.

FIG. 3A and FIG 3B illustrate a step of supplying the resin powder for producing a three-dimensional object from the powder storing tank 12 for supplying to the powder storing tank 11 for forming while forming a resin powder layer having a smooth surface. The stages 13 of the powder storing tank 11 for forming and the powder storing tank 12 for supplying are controlled in a manner that the gap between the stages is adjusted so that a desired layer thickness may be obtained, and the layer forming unit 14 is moved from the powder storing tank 12 for supplying to the powder storing tank 11 for forming, to form a resin powder layer in the powder storing tank 11 for forming.

FIG. 3C illustrates a step of dropping the liquid material 16 for producing a three-dimensional object to a resin powder layer in the powder storing tank 11 for forming, using the three-dimensional object producing liquid material supplying unit 15. Here, the position to which the liquid material 16 for producing a three-dimensional object is dropped in the resin powder layer is determined based on two-dimensional image data (slice data) representing a number of planes obtained by slicing a three-dimensional object.

In FIG. 3D and FIG. 3E, the stage 13 of the powder storing tank 12 for supplying is moved upward and the stage 13 of the powder storing tank 11 for forming is moved downward to control the gap between the stages 13 in a manner to obtain a desired layer thickness, and the layer forming unit 14 is again moved from the powder storing tank 12 for supplying to the powder storing tank 11 for forming, to newly form a resin powder layer in the powder storing tank 11 for forming.

FIG. 3F illustrates a step of again dropping the liquid material 16 for producing a three-dimensional object to the resin powder layer in the powder storing tank 11 for forming, using the three-dimensional object producing liquid material supplying unit 15. These series of steps are repeated, the resultant is dried as needed, and the resin powder for producing a three-dimensional object to which the liquid material for producing a three-dimensional object is not applied (excessive powder) is removed. In this way, a three-dimensional object can be obtained.

In order to mutually bond particles of the resin powder for producing a three-dimensional object, it is preferable to use an adhesive. The adhesive may be added in a dissolved state in the liquid to be discharged, or may be mixed as adhesive particles in the resin powder for producing a three-dimensional object. It is preferable to dissolve the adhesive in the liquid to be discharged. For example, when the liquid to be discharged contains water as a main component, a water-soluble adhesive is preferable.

Examples of the water-soluble adhesive include polyvinyl alcohol (PVA), polyvinyl pyrrolidone, polyamide, polyacrylamide, polyethyleneimine, polyethylene oxide, polyacrylic acid resins, cellulose resins, and gelatin. Among these water-soluble adhesives, polyvinyl alcohol is preferred in order to enhance the strength and dimensional accuracy of a three-dimensional object.

The resin powder for producing a three-dimensional object of the present disclosure has a high fluidity, and can consequently improve the surface property of a three-dimensional object to be produced. Such effects are not limited to methods that employ electromagnetic irradiation, but can be achieved in all three-dimensional object producing apparatuses employing the powder bed additive manufacturing methods represented by binder jet methods.

EXAMPLES

The present disclosure will be described below by way of Examples. The present disclosure should not be construed as being limited to these Examples.

(Example 1)

A block copolymerized polypropylene resin J704UG (obtained from Prime Polymer Co., Ltd.) (100 parts by mass) serving as a polyolefin-based resin and a polyolefin-polyethylene oxide block copolymerized antistatic agent PELECTRON PVL (obtained from Sanyo Chemical Industries, Ltd.) (5 parts by mass) serving as an antistatic agent were stirred and mixed using a Henschel mixer (obtained from Mitsui Mining Co., Ltd.) at a stirring speed of 30 m/s for 5 minutes, to obtain a sample.

The obtained sample was melted and kneaded using a biaxial extruder kneader (TEM-18SS, obtained from Toshiba Machine Co., Ltd.). As the kneading conditions, the temperature of the head at the leading end was set to 200 degrees C, and the screw rotation speed was set to 500 rpm.

The melted kneaded sample was rolled and cooled, and coarsely ground with a cutter mill, to obtain coarsely ground products. The obtained coarsely ground products were passed through a mesh having a mesh size of 75 micrometers, to obtain a block copolymerized polypropylene resin powder. The obtained block copolymerized polypropylene resin powder was further spheronized using a spheronizing surface reforming faculty F-430S (obtained from Hosokawa Micron Corporation) at a grinding rotor rotation speed of 5,800 rpm at a classifying rotor rotation speed of 7,000 rpm for a process time of 90 seconds. The resulting polypropylene resin powder (100 parts by mass) and cross-linked acrylic monodisperse particles MX-150 (obtained from Soken Chemical & Engineering Co., Ltd.) were stirred and mixed using a Henschel mixer (obtained from Mitsui Mining Co., Ltd.) at a stirring speed of 30 m/s for 5 minutes, to obtain a resin powder 1.

(Example 2)

After J704UG serving as a block copolymerized polypropylene resin and PELECTRON PVL serving as an antistatic agent were stirred and mixed using a Henschel mixer as in Example 1, polyethylene oxide (ALKOX E-75, obtained from Meisei Chemical Works, Ltd.) (400 parts by mass) serving as a water-soluble resin was added to the resultant, which was further subjected to mixing for 5 minutes, to obtain a sample.

The obtained sample was melted and kneaded using a biaxial extruder kneader (TEM-18SS, obtained from Toshiba Machine Co., Ltd.). As the kneading conditions, the temperature of the head at the leading end was set to 210 degrees C, and the screw rotation speed was set to 500 rpm.

The melted kneaded sample was rolled and cooled, and coarsely ground with a cutter mill, to obtain coarsely ground products. The obtained coarsely ground products were washed with ion-exchanged water to remove only polyethylene oxide, to obtain a block copolymerized polypropylene resin powder 2.

The obtained block copolymerized polypropylene resin powder (2,100 parts by mass) and a styrene acrylic copolymerized resin (cross-linked acrylic monodisperse particles, MX-150, obtained from Soken Chemical & Engineering Co., Ltd., with a number average particle diameter of 1.5 micrometers) (1 part by mass) serving as an external additive were stirred and mixed using a Henschel mixer (obtained from Mitsui Mining Co., Ltd.) at a stirring speed of 30 m/s for 5 minutes, to obtain a resin powder 2.

(Example 3)

A resin powder 3 was obtained in the same manner as in Example 2, except that unlike in Example 2, the antistatic agent was changed to a boron-based complex LR-147 (obtained from Nippon Coke & Engineering Co., Ltd.).

(Example 4)

A resin powder 4 was obtained in the same manner as in Example 1, except that unlike in Example 1, the spheronizing conditions were changed to a grinding rotor rotation speed of 5,000 rpm, a classifying rotor rotation speed of 6,000 rpm, and a process time of 60 seconds.

(Example 5)

A resin powder 5 was obtained in the same manner as in Example 2, except that unlike in Example 2, the addition amount of the antistatic agent was changed to 0.3 parts by mass.

(Example 6)

A resin powder 6 was obtained in the same manner as in Example 2, except that unlike in Example 2, the addition amount of the antistatic agent was changed to 1.5 parts by mass.

(Example 7)

A resin powder 7 was obtained in the same manner as in Example 2, except that unlike in Example 2, the addition amount of the antistatic agent was changed to 8.0 parts by mass.

(Example 8)

A resin powder 8 was obtained in the same manner as in Example 2, except that unlike in Example 2, the addition amount of the antistatic agent was changed to 22 parts by mass.

(Example 9)

A resin powder 9 was obtained in the same manner as in Example 2, except that unlike in Example 2, the temperature of the head at the leading end was changed to 250 degrees C and the screw rotation speed was changed to 1,500 rpm as the kneading conditions, and the addition amount of polyethylene oxide serving as the water-soluble resin was changed to 500 parts by mass.

(Example 10)

A resin powder 10 was obtained in the same manner as in Example 2, except that unlike in Example 2, the temperature of the head at the leading end was changed to 230 degrees C and the screw rotation speed was changed to 1,200 rpm as the kneading conditions, and the addition amount of polyethylene oxide serving as the water-soluble resin was changed to 400 parts by mass.

(Example 11)

A resin powder 11 was obtained in the same manner as in Example 2, except that unlike in Example 2, the temperature of the head at the leading end was changed to 175 degrees C and the screw rotation speed was changed to 400 rpm as the kneading conditions, and the addition amount of polyethylene oxide serving as the water-soluble resin was changed to 250 parts by mass.

(Example 12)

A resin powder 12 was obtained in the same manner as in Example 2, except that unlike in Example 2, the temperature of the head at the leading end was changed to 170 degrees C and the screw rotation speed was changed to 300 rpm as the kneading conditions, and the addition amount of polyethylene oxide serving as the water-soluble resin was changed to 250 parts by mass.

(Example 13)

A resin powder 13 was obtained in the same manner as in Example 2, except that unlike in Example 2, the block copolymerized polypropylene resin was changed to a random copolymerized polypropylene resin (PM731V, obtained from Japan Polyethylene Corporation).

(Example 14)

A resin powder 14 was obtained in the same manner as in Example 2, except that unlike in Example 2, the antistatic agent was changed to BIOMICELLE BN-105 (obtained from Boron Laboratory Co., Ltd.) and the addition amount of the antistatic agent was changed to 1 part by mass.

(Example 15)

A resin powder 15 was obtained in the same manner as in Example 1 except that unlike in Example 1, no antistatic agent was added.

(Comparative Example 1)

A resin powder 16 was obtained in the same manner as in Example 1, except that unlike in Example 1, the block copolymerized polypropylene resin was changed to a polybutylene terephthalate resin NOVADURAN 5020 (obtained from Mitsubishi Engineering-Plastics Corporation), and the temperature of the head at the leading end was changed to 250 degrees C as the kneading conditions.

(Comparative Example 2)

A resin powder 17 was obtained in the same manner as in Example 1, except that unlike in Example 1, the temperature of the head at the leading end was changed to 250 degrees C and the screw rotation speed was changed to 300 rpm as the kneading conditions, and the grinding rotor rotation speed was changed to 3,000 rpm, the classifying rotor rotation speed was changed to 4,000 rpm, and the process time was changed to 30 seconds as the spheronizing conditions.

(Comparative Example 3)

A resin powder 18 was obtained in the same manner as in Example 1, except that unlike in Example 1, the grinding rotor rotation speed was changed to 3,000 rpm, the classifying rotor rotation speed was changed to 4,000 rpm, and the process time was changed to 30 seconds as the spheronizing conditions.

(Comparative Example 4)

A resin powder 19 was obtained in the same manner as in Example 1, except that unlike in Example 1, the condition changes described below were made.
Coarsely ground products obtained by coarsely grinding with a cutter mill, the melted kneaded sample after rolled and cooled were minutely ground using a LINREX mill (obtained from Hosokawa Micron Corporation) that was capable of cooling the target with liquid nitrogen, and the minutely ground products were extracted. An operation of returning the minutely ground products to the feeding device of the LINREX mill was repeated three times, to obtain a minutely ground sample.

Subsequently, the minutely ground sample was passed through a mesh having a mesh size of 30 micrometers, to obtain a polypropylene resin powder. The polypropylene resin powder was processed at the grinding rotor rotation speed of 1,000 rpm, the classifying rotor rotation speed of 4,000 rpm, for a process time of 60 seconds as the spheronizing conditions, to obtain a resin powder 19.

(Comparative Example 5)

A resin powder 20 was obtained in the same manner as in Example 1, except that unlike in Example 1, the block copolymerized polypropylene resin was changed to a block polypropylene resin J466HP (obtained from SunAllomer Ltd.) and no antistatic agent was used.

Table 1

|  |  | Prescription | | | | |
|  |  | Resin | | | Antistatic agent | |
|  |  | Material | Name | Content (part by mass) | Kind | Content (part by mass) |
| Ex. | 1 | Block polypropylene | J704UG | 100 | PELECTRON PVL (water-insoluble) | 5 |
|  | 2 | Block polypropylene | J704UG | 100 | PELECTRON PVL (water-insoluble) | 5 |
|  | 3 | Block polypropylene | J704UG | 100 | Boron-based complex | 5 |
|  | 4 | Block polypropylene | J704UG | 100 | PELECTRON PVL (water-insoluble) | 5 |
|  | 5 | Block polypropylene | J704UG | 100 | PELECTRON PVL (water-insoluble) | 0.3 |
|  | 6 | Block polypropylene | J704UG | 100 | PELECTRON PVL (water-insoluble) | 1.5 |
|  | 7 | Block polypropylene | J704UG | 100 | PELECTRON PVL (water-insoluble) | 8 |
|  | 8 | Block polypropylene | J704UG | 100 | PELECTRON PVL (water-insoluble) | 22 |
|  | 9 | Block polypropylene | J704UG | 100 | PELECTRON PVL (water-insoluble) | 5 |
|  | 10 | Block polypropylene | J704UG | 100 | PELECTRON PVL (water-insoluble) | 5 |
|  | 11 | Block polypropylene | J704UG | 100 | PELECTRON PVL (water-insoluble) | 5 |
|  | 12 | Block polypropylene | J704UG | 100 | PELECTRON PVL (water-insoluble) | 5 |
|  | 13 | Random polypropylene | PM731V | 100 | PELECTRON PVL (water-insoluble) | 5 |
|  | 14 | Block polypropylene | J704UG | 100 | BIOMICELLE BN-105 (water-soluble) | 1 |
|  | 15 | Block polypropylene | J704UG | 100 | - | - |

(continued)

| | | Prescription | | | | |
|---|---|---|---|---|---|---|
| | | Resin | | | Antistatic agent | |
| | | Material | Name | Content (part by mass) | Kind | Content (part by mass) |
| Comp. Ex. | 1 | Polybutylene terephthalate | NOVADURAN 5020 | 100 | PELECTRON PVL (water-insoluble) | 5 |
| | 2 | Block polypropylene | J704UG | 100 | PELECTRON PVL (water-insoluble) | 5 |
| | 3 | Block polypropylene | J704UG | 100 | PELECTRON PVL (water-insoluble) | 5 |
| | 4 | Block polypropylene | J704UG | 100 | PELECTRON PVL (water-insoluble) | 5 |
| | 5 | Block polypropylene | J466HP | 100 | - | - |

Table 2

| | | Producing method | | | | | |
|---|---|---|---|---|---|---|---|
| | | | Kneading conditions | | Spheronizing conditions | | |
| | | Processing method | Temperature of head at leading end (degree C) | Screw rotation speed (rpm) | Grinding rotor rotation speed (rpm) | Classifying rotor rotation speed (rpm) | Process time (second) |
| Ex. | 1 | Freeze grinding | 200 | 500 | 5,800 | 7,000 | 90 |
| | 2 | Melting kneading | 210 | 500 | - | - | - |
| | 3 | Melting kneading | 210 | 500 | - | - | - |
| | 4 | Freeze grinding | 200 | 500 | 5,000 | 6,000 | 60 |
| | 5 | Melting kneading | 210 | 500 | - | - | - |
| | 6 | Melting kneading | 210 | 500 | - | - | - |
| | 7 | Melting kneading | 210 | 500 | - | - | - |
| | 8 | Melting kneading | 210 | 500 | - | - | - |
| | 9 | Melting kneading | 250 | 1,500 | - | - | - |
| | 10 | Melting kneading | 230 | 1,200 | - | - | - |
| | 11 | Melting kneading | 175 | 400 | - | - | - |

(continued)

| | | Producing method | | | | | |
|---|---|---|---|---|---|---|---|
| | | | Kneading conditions | | Spheronizing conditions | | |
| | | Processing method | Temperature of head at leading end (degree C) | Screw rotation speed (rpm) | Grinding rotor rotation speed (rpm) | Classifying rotor rotation speed (rpm) | Process time (second) |
| | 12 | Melting kneading | 170 | 300 | - | - | - |
| | 13 | Melting kneading | 210 | 500 | - | - | - |
| | 14 | Melting kneading | 210 | 500 | - | - | - |
| | 15 | Melting kneading | 210 | 500 | - | - | - |
| Comp. Ex. | 1 | Freeze grinding | 250 | 500 | 5,800 | 7,000 | 90 |
| | 2 | Freeze grinding | 250 | 300 | 3,000 | 4,000 | 30 |
| | 3 | Freeze grinding | 200 | 500 | 3,000 | 4,000 | 30 |
| | 4 | Freeze grinding | 200 | 500 | 1,000 | 4,000 | 60 |
| | 5 | Melting kneading | 210 | 500 | - | - | - |

Next, "average circularity", "logarithmically converted value Log R of volume resistivity R", "degree of compression", and "volume average particle diameter Dv" of the obtained resin powders 1 to 20 were measured in the manners described below. The results are presented in Table 3-1.

[Average circularity]

The circularity was measured using a wet flow-type particle diameter/shape analyzer (instrument name: FPIA-3000, obtained from Sysmex Corporation). The result is presented in Table 3-1.
The obtained resin powder was weighed out in 100 mg into a 100 mL beaker, a nonionic surfactant (NEUGEN ET-165 obtained from DKS Co., Ltd.) (4 mL) was dropped into the resultant and mixed well, and ion-exchanged water (70 mL) was further added to the resultant. The resultant was stirred for 1 minute using an ultrasonic washing device (BRANSON 2510J-MT with an ultrasonic output power of 125 W and an oscillation frequency of 42 kHz), and the average circularity of the resultant was measured using the wet flow-type particle diameter/shape analyzer.

[Logarithmically converted value Log R of volume resistivity R]

The logarithmically converted value Log R of the volume resistivity was measured according to a capacitance bridge measuring method using a dielectric loss measuring instrument (TR-10C, obtained from Ando Electric Co., Ltd.). The result is presented in Table 3-1.
The resin powder (3 g) was put in a dice, and pressed using an automatic molding device at 5 mPa, to produce a pellet for measurement. The produced pellet was set in the dielectric loss measuring instrument, and measured under the following measurement conditions.

[Measurement conditions]

- Temperature: 23 degrees C
- Relative humidity: 40%

[Degree of compression]

The degree of compression was measured using a powder tester PT-X TYPE (obtained from Hosokawa Micron Corporation). The result is presented in Table 3-1.

The resin powder was injected into a 25 mL container for 30 seconds, and left to stand still. Subsequently, the upper surface of the resin powder was leveled, and the resin powder was weighed. The obtained weight was divided by the volume, to calculate "loose apparent density".

The container used for the weight measurement was returned to the instrument, and tapped 60 times for one minute. Then, the resin powder was injected into the resultant for 30 seconds and left to stand still, the upper surface of the resultant was leveled, and the resultant was weighed. The obtained weight was divided by the volume, to calculate "hardened apparent density".

As the leveling method, a flat plate longer than the diameter of the rim of the container was slid against the rim of the container at an angle of 45 degrees with respect to the opening surface of the container, to remove the resin powder protruding upward from the opening surface of the container.

The degree of compression was calculated according to the formula below.

$$\text{Degree of compression (Hausner ratio)} = (\text{loose apparent density})/(\text{hardened apparent density})$$

[Volume average particle diameter (Dv)]

The volume average particle diameter (Dv) (micrometer) of the obtained resin powder was measured using a particle size distribution measuring instrument (obtained from MicrotracBel Corporation, MICROTRAC MT3000II) and a particle refractive index of each resin powder according to a dry (atmospheric) method without a solvent. As the particle refractive index of each resin powder, the refractive index of polypropylene was 1.48. The result is presented in Table 3-1.

Three-dimensional objects 1 to 20 were produced under the conditions described below using the obtained resin powders 1 to 20.

-Production of three-dimensional object-

The obtained resin powder was stored for one week in an environment at a temperature of 27 degrees C and at a relative humidity of 80% RH. A three-dimensional object was produced using the resin powder after stored for one week and a SLS-type three-dimensional object producing apparatus (obtained from Ricoh Company, Ltd., AM S5500P).

As the object production conditions, the average thickness of a powder layer was set to 0.1 mm, the laser output power was set to 10 watts or higher but 150 watts or lower, the laser scanning space was set to 0.1 mm, and the bed temperature was set to a temperature lower than the melting point of the resin by 3 degrees C.

As the test piece to be produced as a three-dimensional object, five tensile test specimens were produced in the longer direction of the specimens in a manner that the longer side of the specimens extended in the Y axis direction.

The interval between the object forming layers was set to 5 mm.

As the tensile test specimen, a 150 mm-long multipurpose dog bone-like test specimen compliant with International Organization for Standardization (ISO) 3167 Type 1A (the center portion of the specimen having a length of 80 mm, a thickness of 4 mm, and a width of 10 mm) was produced.

Object production was evaluated in terms of "recoatability", and the three-dimensional object obtained was evaluated in terms of "dimensional stability", "surface property (orange peel property)", and "tensile strength". The results are presented in Table 3-2.

<Recoatability>

Using a SLS-type three-dimensional object producing apparatus (obtained from Ricoh Company, Ltd., AM S5500P), recoatability indicating whether or not and how much the obtained powder attached to the recoater or scattered was sensorily evaluated as evaluation of fluidity. The evaluation criteria are as described below. The ratings "1" or higher are non-problematic levels for practical use.

[Evaluation criteria]

2: Attachment to the recoater, scattering, and powder fall due to aggregation of particles were not observed.
1: Attachment to the recoater, scattering, and powder fall were slightly observed, but object production was possible.
0: Object production was impossible due to attachment to the recoater, scattering, and powder fall.

<Dimensional stability>

The depth, width, and height of the five test pieces obtained as the three-dimensional object were measured using Vernier calipers. As dimensional stability as handleability, variation from the average dimension of the test pieces was evaluated. The ratings "1" or higher are non-problematic levels for practical use.

[Evaluation criteria]

3: The average of the dimensional variation of the test pieces was lower than 0.5%.
2: The average of the dimensional variation of the test pieces was lower than 2.0%.
1: The average of the dimensional variation of the test pieces was lower than 5%.
0: The average of the dimensional variation of the test pieces was 5% or higher.

<Surface property (orange peel property)>

The surface of the three-dimensional object was observed visually, observed with an optical microscope, and sensorily tested. The sensory test was performed by touching on the sample with a hand to evaluate the surface property, smoothness in particular based on the feeling of touch. Obtained results were synthesized, and surface property (orange peel property) was evaluated according to the evaluation criteria described blow. The average of the five test pieces was calculated. The ratings "1" and higher are non-problematic levels for practical use.

[Evaluation criteria]

3: The surface was extremely smooth, and almost no bothersome roughness or coarse surface was observed.
2: The surface smoothness was non-problematic, and roughness of the surface or coarse surface was tolerable.
1: The surface had no smoothness, and roughness or coarse surface was visibly recognizable.
0: The surface was scratchy, and many surface defects such as roughness and distortion were observed.

<Tensile strength>

The five test pieces obtained as the three-dimensional object were tested according to a tensile test compliant with ISO 527 (obtained from Shimadzu Corporation, AGS-5KN). The test speed of the tensile test was 50 mm/minute.
The tensile strength test was performed at n=5, the maximum tensile stress point measured was determined as "tensile strength", and the maximum tensile strain point measured was determined as "tensile strain". The evaluation criteria are as described above. The ratings "1" and higher are non-problematic levels for practical use.

[Evaluation criteria]

3: The tensile strength was 50 $N/mm^2$ or higher.
2: The tensile strength was 35 $N/mm^2$ or higher but lower than 50 $N/mm^2$.

1: The tensile strength was 20 N/mm$^2$ or higher but lower than 35 N/mm$^2$.
0: The tensile strength was lower than 20 N/mm$^2$.

<Total evaluation>

For all of the evaluation items, total evaluation was performed according to the evaluation criteria described below. The ratings "1" and higher are non-problematic levels for practical use.

[Evaluation criteria]

3: All of the items were rated 2 or higher, and none of the items were rated 1 or lower.
2: All of the items were rated 1 or higher, and any of the items was rated 3.
1: All of the items were rated 1 or higher, and none of the items was rated 3.
0: Any of the items was rated 0.

Table 3-1

| | | Resin powder property | | | |
|---|---|---|---|---|---|
| | | Average circularity | Degree of compression | Logarithmically converted value Log R of volume resistivity R | Volume average particle diameter (micrometer) |
| Ex. | 1 | 0.955 | 1.33 | 9.51 | 46 |
| | 2 | 0.985 | 1.18 | 9.82 | 52 |
| | 3 | 0.986 | 1.21 | 10.2 | 55 |
| | 4 | 0.952 | 1.32 | 9.28 | 57 |
| | 5 | 0.984 | 1.16 | 10.9 | 55 |
| | 6 | 0.986 | 1.22 | 10.8 | 53 |
| | 7 | 0.983 | 1.28 | 9.38 | 55 |
| | 8 | 0.982 | 1.31 | 9.22 | 55 |
| | 9 | 0.977 | 1.34 | 10.1 | 8 |
| | 10 | 0.979 | 1.26 | 10.0 | 20 |
| | 11 | 0.987 | 1.17 | 9.77 | 140 |
| | 12 | 0.989 | 1.16 | 9.72 | 165 |
| | 13 | 0.984 | 1.21 | 9.95 | 53 |
| | 14 | 0.985 | 1.33 | 9.11 | 56 |
| | 15 | 0.986 | 1.14 | 11.0 | 51 |
| Comp. Ex. | 1 | 0.961 | 1.29 | 9.81 | 38 |
| | 2 | 0.943 | 1.42 | 9.63 | 42 |
| | 3 | 0.945 | 1.33 | 9.65 | 54 |
| | 4 | 0.953 | 1.49 | 9.83 | 22 |
| | 5 | 0.978 | 1.21 | 11.6 | 55 |

Table 3-2

| | | Evaluation results | | | | | | |
|---|---|---|---|---|---|---|---|---|
| | | Recoatablity | Dimensional stability | | Surface property evaluation | Tensile strength | | Total evalu - ation |
| | | | Value (%) | Evalu - ation | | Value [N/mm$^2$] | Evalu - ation | |
| Ex. | 1 | 1 | 0.32 | 3 | 1 | 50.3 | 3 | 2 |
| | 2 | 2 | 0.45 | 3 | 3 | 51.4 | 3 | 3 |
| | 3 | 2 | 0.46 | 3 | 2 | 32.6 | 1 | 2 |
| | 4 | 2 | 0.77 | 2 | 1 | 50.5 | 3 | 2 |
| | 5 | 1 | 3.93 | 1 | 2 | 53.8 | 3 | 2 |
| | 6 | 2 | 1.98 | 2 | 2 | 50.3 | 3 | 3 |
| | 7 | 2 | 0.39 | 3 | 2 | 46.3 | 2 | 3 |
| | 8 | 2 | 0.61 | 2 | 2 | 37.1 | 2 | 2 |
| | 9 | 1 | 1.95 | 2 | 3 | 51.3 | 3 | 2 |
| | 10 | 2 | 0.81 | 2 | 3 | 52.7 | 3 | 3 |
| | 11 | 2 | 0.41 | 3 | 2 | 51.9 | 3 | 3 |
| | 12 | 2 | 0.43 | 3 | 1 | 51.3 | 3 | 2 |
| | 13 | 2 | 0.48 | 3 | 2 | 29.8 | 1 | 2 |
| | 14 | 1 | 1.11 | 2 | 1 | 48.8 | 2 | 2 |
| | 15 | 1 | 1.96 | 2 | 2 | 54.2 | 3 | 2 |
| Comp. Ex. | 1 | 2 | 0.42 | 3 | 2 | 17.4 | 0 | 0 |
| | 2 | 0 | 5.02 | 0 | 2 | 36.6 | 2 | 0 |
| | 3 | 0 | 2.33 | 0 | 0 | 47.5 | 2 | 0 |
| | 4 | 0 | 5.47 | 0 | 2 | 50.1 | 3 | 0 |
| | 5 | 0 | 5.83 | 0 | 2 | 59.1 | 3 | 0 |

In Examples 1 to 15, a resin powder having a good recoatability as fluidity and an object having a good dimensional stability as handleability were obtained. On the other hand, in Comparative Examples, recoatability as fluidity and dimensional stability as handleability were poor. In Comparative Example 2, because the average circularity of the resin powder was 0.95 or less, the resin powder had a poor fluidity, powder fall or powder surface roughness occurred, and recoatability, dimensional stability, surface property, and tensile strength were poor. In Comparative Example 3, because a water-soluble antistatic agent was used as the antistatic agent, the antistatic agent had a greater tendency to receive influences from the external environment, and bled out to be exposed to the surface, to degrade fluidity and the antistatic function, leading to, for example, degradation of the surface property and tensile strength of the object.

Aspects of the present disclosure are, for example, as follows.

<1> A resin powder including
a polyolefin-based resin,
wherein an average circularity of the resin powder is 0.950 or greater,
wherein a logarithmically converted value Log R of a volume resistivity R of the resin powder is 11.5 or less, and
wherein a degree of compression of the resin powder is 1.45 or less.
<2> The resin powder according to <1>,
wherein a volume average particle diameter of the resin powder is 10 micrometers or greater but 150 micrometers or less.
<3> The resin powder according to <1> or <2>, further including
an antistatic agent.

<4> The resin powder according to <3>,
wherein the antistatic agent is water-insoluble.
<5> The resin powder according to <3> or <4>,
wherein a content of the antistatic agent is 0.5% by mass or greater but less than 20% by mass relative to a total amount of the resin powder.
<6> The resin powder according to <3> or <4>,
wherein a content of the antistatic agent is 1.0% by mass or greater but less than 10% by mass relative to a total amount of the resin powder.
<7> The resin powder according to any one of <1> to <6>,
wherein the polyolefin-based resin is a block polypropylene resin.
<8> The resin powder according to any one of <1> to <7>,
wherein the antistatic agent is a polyolefin-polyether block copolymer.
<9> A resin powder for producing a three-dimensional object, the resin powder including
a polyolefin-based resin,
wherein an average circularity of the resin powder for producing a three-dimensional object is 0.950 or greater,
wherein a logarithmically converted value Log R of a volume resistivity R of the resin powder for producing a three-dimensional object is 11.5 or less, and
wherein a degree of compression of the resin powder for producing a three-dimensional object is 1.45 or less.
<10> The resin powder for producing a three-dimensional object according to <9>,
wherein a volume average particle diameter of the resin powder for producing a three-dimensional object is 10 micrometers or greater but 150 micrometers or less.
<11> The resin powder for producing a three-dimensional object according to <9> or <10>, further including
an antistatic agent.
<12> The resin powder for producing a three-dimensional object according to <11>,
wherein the antistatic agent was water-insoluble.
<13> The resin powder for producing a three-dimensional object according to <11> or <12>,
wherein a content of the antistatic agent is 0.5% by mass or greater but less than 20% by mass relative to a total amount of the resin powder for producing a three-dimensional object.
<14> The resin powder for producing a three-dimensional object according to <11> or <12>,
wherein a content of the antistatic agent is 1.0% by mass or greater but less than 10% by mass relative to a total amount of the resin powder for producing a three-dimensional object.
<15> The resin powder for producing a three-dimensional object according to any one of <9> to <14>,
wherein the polyolefin-based resin is a block polypropylene resin.
<16> The resin powder for producing a three-dimensional object according to any one of <9> to <14>,
wherein the antistatic agent is a polyolefin-polyether block copolymer.
<17> A method for producing the resin powder according to any one of <1> to <8>, the method including
using a melting kneading method.
<18> A three-dimensional object producing method including:

forming a layer containing the resin powder for producing a three-dimensional object according to any one of <9> to <16>; and
mutually bonding particles of the resin powder for producing a three-dimensional object in a selected region of the layer,
wherein the three-dimensional object producing method repeats the forming and the mutually bonding.

<19> A three-dimensional object producing apparatus including:

a layer forming unit configured to form a layer containing the resin powder for producing a three-dimensional object according to any one of <9> to <16>; and
a powder bonding unit configured to mutually bond particles of the resin powder for producing a three-dimensional object in a selected region of the layer.

The resin powder according to any one of <1> to <8>, the resin powder for producing a three-dimensional object according to any one of <9> to <16>, the method for producing the resin powder according to <17>, the three-dimensional object producing method according to <18>, and the three-dimensional object producing apparatus according to <19> can solve the various problems in the related art and achieve the object of the present disclosure.

**Claims**

1. A resin powder comprising
   a polyolefin-based resin,
   wherein an average circularity of the resin powder is 0.950 or greater,
   wherein a logarithmically converted value Log R of a volume resistivity R of the resin powder is 11.5 or less, and
   wherein a degree of compression of the resin powder is 1.45 or less.

2. The resin powder according to claim 1,
   wherein a volume average particle diameter of the resin powder is 10 micrometers or greater but 150 micrometers or less.

3. The resin powder according to claim 1 or 2, further comprising an antistatic agent.

4. The resin powder according to claim 3,
   wherein the antistatic agent is water-insoluble.

5. The resin powder according to claim 3 or 4,
   wherein a content of the antistatic agent is 0.5% by mass or greater but less than 20% by mass relative to a total amount of the resin powder.

6. The resin powder according to claim 3 or 4,
   wherein a content of the antistatic agent is 1.0% by mass or greater but less than 10% by mass relative to a total amount of the resin powder.

7. The resin powder according to any one of claims 3 to 6,
   wherein the antistatic agent is a polyolefin-polyether block copolymer.

8. The resin powder according to any one of claims 1 to 7,
   wherein the polyolefin-based resin is a block copolymerized polypropylene resin.

9. A resin powder for producing a three-dimensional object, the resin powder comprising
   a polyolefin-based resin,
   wherein an average circularity of the resin powder for producing a three-dimensional object is 0.950 or greater,
   wherein a logarithmically converted value Log R of a volume resistivity R of the resin powder for producing a three-dimensional object is 11.5 or less, and
   wherein a degree of compression of the resin powder for producing a three-dimensional object is 1.45 or less.

10. A three-dimensional object producing method comprising:

    forming a layer containing the resin powder for producing a three-dimensional object according to claim 9; and
    mutually bonding particles of the resin powder for producing a three-dimensional object in a selected region of the layer,
    wherein the three-dimensional object producing method repeats the forming and the mutually bonding.

11. A three-dimensional object producing apparatus comprising:

    a layer forming unit configured to form a layer containing the resin powder for producing a three-dimensional object according to claim 9; and
    a powder bonding unit configured to mutually bond particles of the resin powder for producing a three-dimensional object in a selected region of the layer.

# FIG. 1A

Perimeter: C1
Particle projected area: S

# FIG. 1B

Circle having area S
Perimeter: C2

# FIG. 2

# FIG. 3A

# FIG. 3B

# FIG. 3C

# FIG. 3D

FIG. 3E

FIG. 3F

Europäisches
Patentamt

European
Patent Office

Office européen
des brevets

# EUROPEAN SEARCH REPORT

Application Number

EP 21 16 1507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2004 212540 A (RICOH KK) 29 July 2004 (2004-07-29) | 1-9 | INV. B33Y70/00 |
| A | * paragraph [0059] * | 10,11 | C08L23/00 |
| | * paragraph [0067] * | | C08L53/00 |
| | * paragraph [0108] - paragraph [0115] * | | |
| | * paragraph [0136] * | | |
| | * paragraph [0144] * | | |
| | * examples * | | |
| | * paragraph [0149] * | | |
| | ----- | | |
| X | JP 3 684074 B2 (CANON KK) 17 August 2005 (2005-08-17) | 1-9 | |
| A | * paragraph [0042] - paragraph [0075] * | 10,11 | |
| | * paragraph [0171] * | | |
| | * paragraph [0249] - paragraph [0289] * | | |
| | * paragraph [0379] - paragraph [0472] * | | |
| | ----- | | |
| X | JP 2004 069992 A (RICOH KK) 4 March 2004 (2004-03-04) | 1-9 | |
| | * paragraph [0049] - paragraph [0051] * | | |
| | * paragraph [0064] - paragraph [0068] * | | TECHNICAL FIELDS SEARCHED (IPC) |
| | * paragraph [0097] * | | |
| | * claims * | | B33Y |
| | ----- | | B29C |
| A | WO 2017/179139 A1 (HITACHI LTD [JP]) 19 October 2017 (2017-10-19) | 1-11 | C08L C09J |
| | * claims * | | B29B |
| | * paragraph [0099] - paragraph [0119] * | | |
| | ----- | | |

The present search report has been drawn up for all claims

| Place of search | Date of completion of the search | Examiner |
|---|---|---|
| The Hague | 30 July 2021 | Whelan, Natalie |

EPO FORM 1503 03.82 (P04C01)

**ANNEX TO THE EUROPEAN SEARCH REPORT
ON EUROPEAN PATENT APPLICATION NO.**

EP 21 16 1507

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2021

| Patent document cited in search report | | Publication date | Patent family member(s) | | Publication date |
|---|---|---|---|---|---|
| JP 2004212540 | A | 29-07-2004 | JP 3987794 B2<br>JP 2004212540 A | | 10-10-2007<br>29-07-2004 |
| JP 3684074 | B2 | 17-08-2005 | JP 3684074 B2<br>JP H11174731 A | | 17-08-2005<br>02-07-1999 |
| JP 2004069992 | A | 04-03-2004 | JP 3979587 B2<br>JP 2004069992 A | | 19-09-2007<br>04-03-2004 |
| WO 2017179139 | A1 | 19-10-2017 | JP 6655714 B2<br>JP WO2017179139 A1<br>US 2019111617 A1<br>WO 2017179139 A1 | | 26-02-2020<br>20-12-2018<br>18-04-2019<br>19-10-2017 |

For more details about this annex : see Official Journal of the European Patent Office, No. 12/82

**EP 3 885 142 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018154116 A
- WO 2008057844 A
- US 6531086 B